**Europäisches Patentamt**

**European Patent Office**

**Office européen des brevets**

(19)

(11) Numéro de publication: **0 133 399**
**B1**

# (12) FASCICULE DE BREVET EUROPEEN

(45) Date de publication du fascicule du brevet:
**03.06.87**

(51) Int. Cl.⁴: **B 21 B 33/00, F 16 P 7/00**

(21) Numéro de dépôt: **84401534.7**

(22) Date de dépôt: **20.07.84**

(54) **Dispositif de sécurité hydraulique pour mécanisme de serrage des cylindres de laminoir.**

(30) Priorité: **22.07.83 FR 8312148**

(43) Date de publication de la demande:
**20.02.85 Bulletin 85/8**

(45) Mention de la délivrance du brevet:
**03.06.87 Bulletin 87/23**

(84) Etats contractants désignés:
**BE DE GB IT**

(56) Documents cités:
**DE - A - 2 261 990**
**DE - A - 2 744 810**

(73) Titulaire: **CLECIM, 107 boulevard de la Mission Marchand, F-92400 Courbevoie (FR)**

(72) Inventeur: **Morel, Michel, 4 bis Avenue André Chénier, F-77500 Chelles (FR)**
Inventeur: **Pillac, Bernard, 47 rue Carves, F-92120 Montrouge (FR)**

(74) Mandataire: **Le Brusque, Maurice et al, Cabinet Harlé et Phélip 21, rue de la Rochefoucauld, F-75009 Paris (FR)**

ACTORUM AG

## Description

La présente invention concerne un dispositif de sécurité hydraulique pour le mécanisme de serrage des cylindres de laminoir.

Un laminoir, particulièrement pour traiter des matières métalliques, est constitué par une cage qui comprend plusieurs cylindres alignés verticalement, parmi lesquels deux cylindres de travail, de diamètre relativement petit, servant à réduire une bande métallique passée entre eux. Les cylindres de travail sont reliés soit directement, soit par l'intermédiaire d'autres cylindres à un ou plusieurs organes de commande qui déterminent leur déplacement par rapport aux montants verticaux de la cage, pour régler leur écartement à vide ou en charge, en fonction de l'épaisseur du produit laminé.

L'un de ces organes de commande servant à déplacer les cylindres est généralement constitué par un vérin hydraulique comprenant deux éléments, respectivement un piston plongeur en tant que piston hydraulique et un corps entourant le piston, ceux-ci pouvant coulisser axialement l'un par rapport à l'autre et prenant appui, directement ou indirectement, l'un sur la cage fixe et l'autre sur un cylindre de travail.

A certains moments de l'exploitation du laminoir, par exemple pendant les opérations de maintenance, et plus particulièrement pendant le remplacement des cylindres de laminage lorsqu'ils sont usés, ou dans le cas où le laminoir possède un autre système de commande, le vérin hydraulique peut effectuer toute sa course sans rencontrer de résistance mécanique, si bien qu'une remise en pression accidentelle du vérin hydraulique, due par exemple à une défaillance du système de commande du fluide sous pression ou à une fausse manoeuvre, peut entraîner une détérioration de la butée prévue à la partie inférieure du piston, car évidemment elle n'est pas dimensionnée pour supporter une forte charge.

A cet effet, pour éviter la détérioration de la butée du vérin, on connaît des dispositifs de sécurité qui limitent la course de celui-ci et qui sont constitués par des capteurs électriques de position coupant par l'intermédiaire d'électrovannes, l'alimentation du fluide sous pression quand le corps descend à un certain niveau. Mais ces capteurs nécessitent des réglages fréquents et sont d'une fiabilité incertaine car ils se trouvent en permanence en contact avec le liquide de laminage et/ou ses vapeurs, et/ou la graisse et/ou des particules métalliques.

L'invention qui remédie à de tels inconvénients s'applique donc à un laminoir comprenant les caractéristiques selon le préambule de la revendication 1, voir DE-A-2 261 990.

Selon l'invention, le dispositif de sécurité selon le préambule de la revendication 1 comporte une soupape hydraulique de sécurité logée à l'intérieur de la chambre de commande du vérin et comprend on organe de réduction automatique de la pression du fluide dans la chambre de commande monté sur l'un des éléments, respectivement le piston ou le corps du vérin et associé à un organe de commande disposé à l'intérieur de la chambre de commande et susceptible de commander l'organe de réduction de pression en venant au contact de l'autre élément, respectivement le corps ou le piston du vérin dès que la course de ce dernier atteint une position limite déterminée.

Les avantages de l'invention apparaîtront lors de la description détaillée de l'exemple non limitatif de réalisation qui va suivre, illustré par les dessins annexés.

La fig. 1 représente une vue schématique partielle en coupe verticale d'un laminoir muni du dispositif de sécurité;

la fig. 2 représente une vue en coupe verticale à plus grande échelle du dispositif de sécurité.

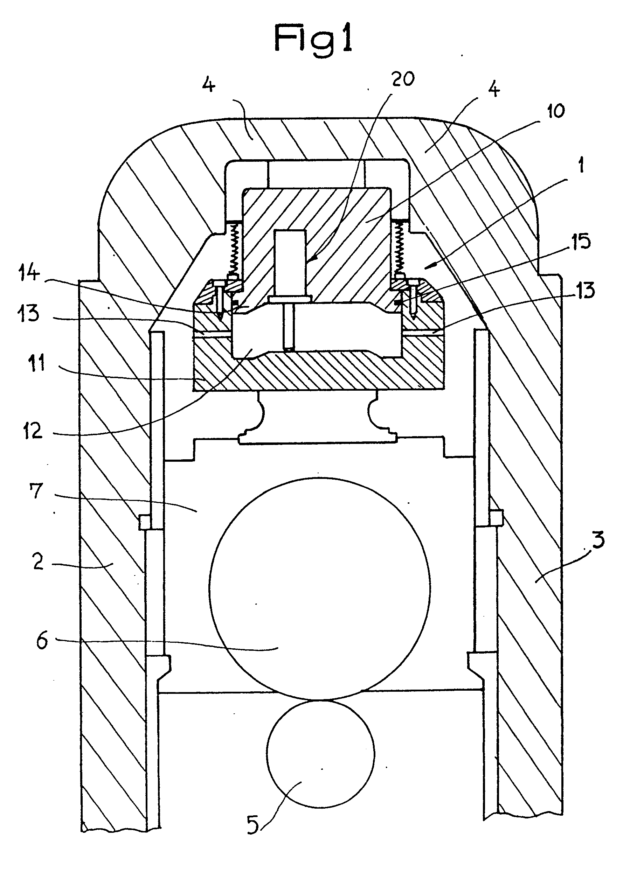

En se reportant à la fig. 1, on a représenté les montants 2 et 3 d'un cadre d'une cage de laminoir, reliés par une traverse supérieure 4. Ce laminoir comprend d'une part un cylindre de travail supérieur 5 de petit diamètre et un cylindre d'appui supérieur 6 et d'autre part, de façon symétrique, un cylindre de travail inférieur et un cylindre d'appui inférieur non représentés. L'empoise 7 du cylindre d'appui supérieur 6 est en contact avec un vérin hydraulique désigné dans son ensemble par la référence 1.

Le vérin hydraulique 1 est constitué par un piston fixe 10 supporté par la traverse supérieure 4 et par un corps 11 portant l'empoise 7 du cylindre d'appui supérieur 6. Le corps 11 entoure le piston 10 sous la forme d'une enveloppe et ménage avec ledit piston une chambre de commande 12 raccordée par des conduits 13 au dispositif d'alimentation du fluide hydraulique sous pression. Le piston 10 comporte à sa partie inférieure un rebord annulaire 14. L'étanchéité de la chambre de commande 12 est assurée par des joints 15 prévus sur le rebord annulaire 14.

Directement à l'intérieur du piston 10 est montée une soupape hydraulique de sécurité 20 qui libère automatiquement la pression dans la chambre 12 quand le corps 11 atteint une position déterminée.

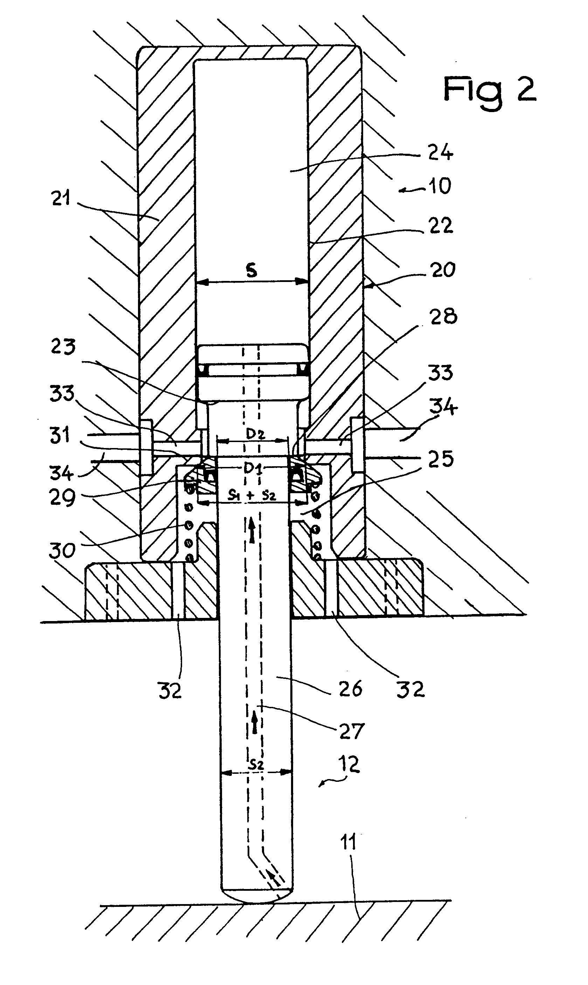

Cette soupape hydraulique 20 (fig. 2) est constituée par un cylindre 21 qui s'emboite dans un évidement prévu à l'intérieur du piston 10, ledit cylindre comportant un alésage central 22 dans lequel coulisse un petit piston 23 de section S séparant cet alésage en une chambre supérieure 24 et une chambre inférieure 25. Le petit piston 23 se prolonge vers le bas par une tige 26 de section $S_2$ qui traverse la chambre inférieure 25 de la soupape 20 et la chambre de commande 12 du vérin hydraulique 1 de telle manière que son extrémité soit en contact avec le corps 11 du vérin. Le piston 23 et la tige 26 comportent sur toute leur longueur un orifice 27 mettant en communication la chambre de pression 12 avec la chambre supérieure 24 de la soupape 20. Le diamètre de la tige 26 est inférieur au diamètre du piston 23 pour former un épaulement circulaire 28.

Dans la chambre inférieure 25, est monté, coulissant sur la tige 26, un clapet de décharge 29 rappelé vers le haut par un ressort 30 et par la pression s'exerçant sur la surface circulaire $S_1$ délimitée par les diamètres $D_1$ et $D_2$, contre un siège 31 prévu à l'intérieur du cylindre 21. La chambre de commande 12 et la chamre inférieure 25 communiquent entre elles par des ouvertures 32. D'autre part, le cylindre 21 comporte au-dessus du siège 31 des orifices 33 pour le passage du fluide sous pression au moment de l'ouverture du clapet 29. Ces orifices 33 sont placés en correspondance avec des orifices 34 percés dans le piston 10, eux-mêmes reliés au retour du système hydraulique.

Pendant une opération de changement des cylindres du laminoir par exemple, le corps 11 du vérin est désolidarisé de l'empoise 7 du cylindre d'appui supérieur 6 et se trouve donc libre. Si une remise en pression accidentelle du vérin se produit au cours de cette opération, le fonctionnement du dispositif de sécurité décrit ci-dessus est le suivant:

Le fluide sous pression admis dans la chambre 12 du vérin par les conduits 13 pénètre simultanément dans la chambre supérieur 24 par l'orifice 27 et dans la chambre inférieure 25 de la soupape 20 par les ouvertures 32, mais il ne peut passer par les orifices 33 car le clapet 29 est maintenu appliqué contre son siège par la pression du fluide et le ressort 30. L'ensemble piston 23-tige 26 suit donc les déplacements du corps 11. Dès que la course du corps 11 atteint une position déterminée correspondant à la course du début de sécurité, l'épaulement circulaire 28 vient en contact avec le clapet 29. Ensuite, si la course du corps 11 se poursuit, l'effort exercé sur la tige 26 dirigé vers le bas, $P (S-S_2)$ est supérieur à l'effort antagoniste dirigé vers le haut par le clapet de décharge 29 : $P S_1 + T$, T étant l'effort exercé par le ressort 30.

On a donc

$$PS > P (S_1 + S_2) + T$$

où S représente la section du piston,
$S_1$ la section du clapet 29 et $S_2$ la section de la tige 26,
ce qui provoque par l'intermédiaire de l'épaulement 28 l'ouverture du clapet 29 et le passage du fluide sous pression de la chambre 12 vers les orifices de sortie 33. La chambre 12 devient donc soumise à une pression réduite Pr, définie par l'égalité:

$$Pr.S = Pr (S_1 + S_2) + T$$

c'est-à-dire: $Pr = \dfrac{T}{S- (S_1 + S_2)}$

La sécurité est par conséquent absolue en provoquant une décompression du vérin hydraulique.

Ce dispositif placé dans le mécanisme de serrage hydraulique des cylindres du laminoir agit donc directement, sans aucun organe intermédiaire, sur le fluide sous pression pour limiter la pression du corps du vérin enfin de course de celui-ci et éviter toute détérioration de ce vérin par xemple au cours des opérations pour lesquelles celui-ci peut effectuer toute sa course sans rencontrer de résistance mécanique.

Le système de sécurité peut également être disposé dans le corps du vérin hydraulique.

Il est bien entendu que l'on peut sans sortir du cadre de l'invention comme revendiqué imaginer des variantes et des perfectionnements de détails et de même envisager l'emploi de moyens équivalents.

**Revendications**

1. Dispositif de sécurité hydraulique pour mécanisme de serrage des cylindres de laminoir (5, 6) qui comprend, à l'intérieur d'une cage fixe (2, 3):
   – des cylindres (5) de travail entre lesquels on fait passer le produit soumis au laminage,
   – et un vérin (1) hydraulique de réglage de la pression à transmettre aux cylindres (5) de travail comprenant un piston (10) et un corps (11) prenant appui, directement ou indirectement, l'un sur la cage fixe (2, 3) et l'autre sur un cylindre (5) de travail et montés coulissants axialement l'un par rapport à l'autre en ménageant une chambre de commande (12) raccordée à un dispositif d'alimentation en fluide hydraulique sous pression, caractérisé par le fait qu'il comporte une soupape (20) hydraulique de sécurité logée à l'intérieur de la chambre de commande (12) du vérin (1) et comprenant un organe (29) de réduction automatique de la pression du fluide dans la chambre de commande (12) monté sur l'un des éléments, respectivement le piston (10) ou le corps (11), du vérin (1) et associé à un organe de commande (26) disposé à l'intérieur de la chambre de commande (12) et susceptible de commander l'organe de réduction de pression (29) en venant au contact de l'autre élément, respectivement le corps (11) ou le piston (10) du vérin (1) dès que la course de ce dernier atteint une position limite déterminée.

2. Dispositif selon la revendication 1, caractérisé par le fait que la soupape (20) est formée par un cylindre (21) qui s'emboite dans un évidement prévu à l'intérieur du piston (10) ou du corps (11) du vérin (1).

3. Dispositif selon la revendication 2, caractérisé par le fait que le cylindre (21) comporte un alésage central (22) dans lequel coulisse un petit piston (23) séparant cet alésage en une chambre supérieure (24) et une chambre inférieure (25).

4. Dispositif selon les revendications 1 et 3, caractérisé par le fait que le petit piston (23) se prolonge vers le bas par une tige (26) qui traverse la chambre inférieure (25) de la soupape (20) et la chambre de commande (12) du vérin (1).

5. Dispositif selon l'une quelconque des revendications précédentes, caractérisé par le fait que la chambre de commande (12) du vérin communique d'une part avec la chambre supérieure (24) de la soupape (20) par un orifice (27) prévu dans la tige (26) et le piston (23) et d'autre part avec la chambre inférieure (25) par des ouvertures (32).

6. Dispositif selon l'une quelconque des revendications précédentes, caractérisé par le fait que la soupape (20) comporte, dans la chambre inférieure (25), un clapet de décharge (29) coulissant sur la tige (26) et rappelé vers le haut par un ressort (30) contre un siège (31) prévu à l'intérieur du cylindre (21).

7. Dispositif selon l'une quelconque des revendications précédentes, caractérisé par le fait que le cylindre (21) comporte au-dessus du siège (31) des orifices (33) pour le passage du fluide sous pression, provenant de la chambre de commande (12) du vérin (1), au moment de l'ouverture du clapet (29), ces orifices étant placés en correspondance avec des orifices (34) percés dans le piston (10) ou dans le corps (11), eux-mêmes reliés au retour du système hydraulique.

**Patentansprüche**

1. Hydraulische Sicherheitsvorrichtung für den Einspannmechanismus für Walzwerkzylinder (5, 6), die im Inneren eines festen Gehäuses (2, 3) aufweist:
— Arbeitszylinder (5), zwischen denen man das dem Walzvorgang unterzogene Produkt hindurchgehen lässt,
— und eine hydraulische Spanneinrichtung (1) für die Regelung des den Arbeitszylindern (5) zu übermittelnden Druckes, mit einem Kolben (10) und einem Körper (11), welche direkt oder indirekt, der eine auf dem festen Gehäuse (2, 3) und der andere auf dem Arbeitszylinder (5) aufliegen und zueinander axial verschiebbar angebracht sind unter Schaffung einer Steuerkammer (12), die an eine Versorgungsvorrichtung für hydraulisches Fluid unter Druck angeschlossen ist, dadurch gekennzeichnet, dass sie ein hydraulisches Sicherheitsventil (20) aufweist, welches im Inneren der Steuerkammer (12) der Spanneinrichtung (1) gelagert ist und ein Organ (29) aufweist für die automatische Verringerung des Druckes des Fluids in der Steuerkammer (12), welches auf einem der Elemente der Einspanneinrichtung angebracht ist, bzw. dem Kolben (10) oder dem Körper (11), und einem Steuerorgan (26) zugeordnet ist, welches im Inneren der Steuerkammer (12) angeordnet und geeignet ist, das Druckreduzierorgan (29) zu steuern, indem es mit dem anderen Element in Kontakt kommt bzw. dem Körper (11) oder dem Kolben (10) der Einspanneinrichtung (1), sobald der Hub dieses letzteren eine bestimmte Grenzposition einnimmt.

2. Vorrichtung nach Anspruch 1, dadurch gekennzeichnet, dass das Ventil (20) durch einen Zylinder (21) gebildet ist, der in eine Aussparung passt, die im Inneren des Kolbens (10) oder des Körpers (11) der Einspanneinrichtung (1) vorgesehen ist.

3. Vorrichtung nach Anspruch 2, dadurch gekennzeichnet, dass der Zylinder (21) eine mittige Bohrung (22) aufweist, in welcher ein kleiner Kolben (23) verschiebbar ist, welcher diese Bohrung in eine obere Kammer (24) und eine untere Kammer (25) trennt.

4. Vorrichtung nach den Ansprüchen 1 und 2, dadurch gekennzeichnet, dass der kleine Kolben (23) sich nach unten durch einen Schaft (26) verlängert, welcher die untere Kammer (25) des Ventils (20) und die Steuerkammer (12) der Einspanneinrichtung (1) durchquert.

5. Vorrichtung nach einem der vorhergehenden Ansprüche, dadurch gekennzeichnet, dass die Steuerkammer (12) der Einspanneinrichtung einerseits mit der oberen Kammer (24) des Ventils (20) durch eine Öffnung (27), die in dem Schaft (26) und dem Kolben (23) vorgesehen ist, und andererseits mit der unteren Kammer (25) durch Öffnungen (32) in Verbindung steht.

6. Vorrichtung nach einem der vorhergehenden Ansprüche, dadurch gekennzeichnet, dass das Ventil (20) in der unteren Kammer (25) ein Ausflussventil (29) aufweist, welches auf dem Schaft (26) verschieblich ist und nach oben durch eine Feder (30) gegen einen Sitz (31) zurückgestellt wird, der im Inneren des Zylinders (21) vorgesehen ist.

7. Vorrichtung nach einem der vorhergehenden Ansprüche, dadurch gekennzeichnet, dass der Zylinder (21) oberhalb des Sitzes (31) Öffnungen (33) aufweist für den Durchgang des Fluids unter Druck, welches aus der Steuerkammer (12) der Einspanneinrichtung (1) im Augenblick des Öffnens des Ventils (29) herkommt, wobei die Öffnungen unter Zuordnung mit Öffnungen (34) angeordnet sind, welche in dem Kolben (10) oder in dem Körper (11) durchstochen sind, die selbst mit dem Rücklauf des hydraulischen Systems verbunden sind.

**Claims**

1. Hydraulic safety device for a mechanism for pressing the rollers of a rolling mill (5, 6) which comprises, within a fixed housing (2, 3):
— working rollers (5) between which the product subject to rolling is passed,
— and a hydraulic jack (1) for adjusting the pressure to be transmitted to the working rollers (5), which comprises a piston (10) and a body (11), resting, directly or indirectly, one on the fixed housing (2, 3) and the other on a working roller (5) and which are slidingly mounted axially relative to each other forming a control chamber (12) connected to a device for the supply of hydraulic fluid under pressure, characterized in that it comprises a hydraulic safety valve (20) housed within the control chamber (12) of the jack (1) and comprising a device (29) for the automatic pressure reduction of the fluid in the control chamber (12) mounted on one of the components, the piston (10) or the body (11), respectively, of the jack (1) and combined with a control device (26) arranged within the control chamber (12) and capable of controlling the pressure reducing device (29) and which comes into contact with the other component, the body (11) or the piston (10), respectively, of the jack (1) as soon as the travel of the latter reaches a defined limiting position.

2. Device according to claim 1, characterized in that the valve (20) is formed by a cylinder (21) which is housed within a recess provided within the piston (10) or within the body (11) of the jack (1).

3. Device according to claim 2, characterized in that the cylinder (21) comprises a control bore (22) in which a small piston (23) slides, dividing this bore into an upper chamber (24) and a lower chamber (25).

4. Device according to claims 1 and 3, characterized in that the small piston (23) extends downwards by means of a rod (26) which passes through the lower chamber (25) of the valve (20) and the control chamber (12) of the jack (1).

5. Device according to any one of the preceding claims, characterized in that the control chamber (12) of the jack communicates, on the one hand, with the upper chamber (24) of the valve (20) through an opening (27) provided in the rod (26) and the piston (23) and, on the other hand, with the lower chamber (25) through openings (32).

6. Device according to any one of the preceding claims, characterized in that the valve (20) comprises, in the lower chamber (25), a delivery valve (29) sliding on the rod (26) and reseating back upwards by a spring (30) against a seat (31) provided within the cylinder (21).

7. Device according to any one of the preceding claims, characterized in that the cylinder (21) comprises, above the seat (31), openings (33) for the passage of the fluid under pressure, originating from the control chamber (12) of the jack (1), at the time of the opening of the valve (29), these openings being placed in correspondance with openings (34) made in the piston (10) or in the body (11), which themselves are connected to the return of the hydraulic system.

# Fig 1

Fig 2